# EUROPEAN PATENT APPLICATION

(11) **EP 2 743 638 A1**
(43) Date of publication of application: **18.06.2014**
(21) Application number: 13466031.5
(22) Date of filing: 04.12.2013
(51) Int. Cl.: G01B 21/04, G01B 11/00, G01B 11/245, G01S 5/16

(54) **An apparatus for optical measurement and/or optical calibration of a position of an object in space**

(30) Priority: 12.12.2012 CZ 20120897
(71) Applicant: CVUT V Praze, Fakulta Strojní, 166 07 Praha 6 (CZ)
(72) Inventor: Valásek, Michael, 14300 Praha 4 (CZ); Necas, Martin, 14700 Praha 4 (CZ); Benes, Petr, 18200 Praha 8 (CZ); Svéda, Jirí, 27201 Kladno (CZ)
(74) Representative: Novotny, Karel

(57) **Abstract**

The invention concerns an apparatus for optical measurement and/or optical calibration of a position of an object in space consisting of a platform to be connected to a measured or a calibrated object and of at least one transmitter of an optical beam positioned on the platform and/or on a frame and of at least one receiver of an optical beam positioned on the frame and/or on the platform, the number of the transmitters (4) of optical beams is at least three and the number of receivers (5) of optical beams is at least three.

At least three transmitters (4) of optical beams are represented by the reflectors (7) or by the reference elements (9) or by the sources (10) of a laser beam or by a combination of the reflectors (7) and/or the reference elements (9) and/or the sources (10) of a laser beam positioned on the frame (1) and/or on the platform (2) and at least three receivers (5) of optical beams are represented by the laser sensors (6) or by the optical cameras (8) or by the photosensitive elements (11) and by a combination of the laser sensors (6) and/or the optical cameras (8) and/or the photosensitive elements (11) positioned on the platform (2) and/or on the frame (1).

## Description

### Technical Field

The invention concerns an apparatus for optical measurement and/or optical calibration of a position of an object in space consisting of a platform to be connected to a measured or a calibrated object and of at least one transmitter of an optical beam positioned on the platform and/or on a frame and of at least one receiver of the optical beam positioned on the frame and/or on the platform.

### State-of-the-art

The apparatus for measurement and/or calibration of a position of an object in space including a solution for measurement and/or calibration are known e.g. from the EP 1968773B1 documents and from the PV 2010-178 patent application. A new solution of the measurement and calibration of an object in space has been described using redundant measurements, which means that the number of sensors is larger than the number of degrees of freedom of the measured and/or the calibrated object in space. In these applications mechanical apparatuses for performing redundant measurements have been described.

Their disadvantage is a limited range and thus applicability in smaller working areas. They are difficult to be used in larger working areas and for larger machines and are quite expensive.

Another disadvantage is that mechanical devices, especially if they are larger, can be influenced by outer acting forces, especially by the gravity force, by which the mechanical devices are deformed and thus measurement errors are caused.

The aim of this invention is to eliminate the disadvantages mentioned above, especially to enlarge measurement range and to eliminate the influence of outer acting forces, especially of the gravity force.

### Subject Matter of the Invention

The subject matter of the apparatus for optical measurement and/or optical calibration of a position of an object in space consisting of a platform to be connected to a measured or a calibrated object and of at least one transmitter of an optical beam positioned on the platform and/or on the frame and of at least one receiver of an optical beam positioned on the frame and/or on the platform lies in the fact that the number of the transmitters of optical beams is at least three and the number of the receivers of optical beams is at least three.

At least three transmitters of optical beams are represented by reflectors or by reference elements or by sources of a laser beam or by a combination of reflectors and/or reference elements and/or sources of the laser beam positioned on the frame and/or the platform and at least three receivers of optical beams are represented by laser sensors or by optical cameras or by photosensitive elements or by a combination of laser sensors and/or optical cameras and/or photosensitive elements positioned on the platform and/or on the frame.

Alternatively, the transmitters of optical beams are represented by at least three reflectors of a laser beam positioned on the frame and/or on the platform and the receivers of optical beams are represented by at least three laser sensors positioned on the platform and/or on the frame,
or the transmitters of optical beams are represented by at least three reference elements positioned on the frame and/or on the platform and the receivers of optical beams are represented by at least three optical cameras positioned on the platform and/or on the frame,

or the transmitters of optical beams are represented by at least three sources of a laser beam positioned on the platform and/or on the frame and the receivers of optical beams are represented by at least three photosensitive elements positioned on the frame and/or on the platform.

The transmitters of optical beams and/or the receivers of optical beams can be possibly connected to the frame removably, whereas the number of transmitters of optical beams is at least four and the number of receivers of optical beams is at least four.

The advantage of the apparatus according to the invention is the possibility of a substantial increase of the range of measurement and thus a possibility of measurement and/or calibration in large working areas, whereas decrease, possibly elimination of unfavorable influence of the acting forces, especially of the gravity force, on the accuracy of the measurement is achieved.

### Review of the Figures in the Drawings

In the enclosed Figures there are schematic depictions of the apparatus for optical measurement and/or optical calibration of a position of a measured and/or a calibrated object in space, where
Figs. 1 to 5 depict individual alternative embodiments of its planar projection and
Fig. 6 depicts a spatial view on the apparatus according to Fig. 1

### Examples of the Embodiments of the Invention

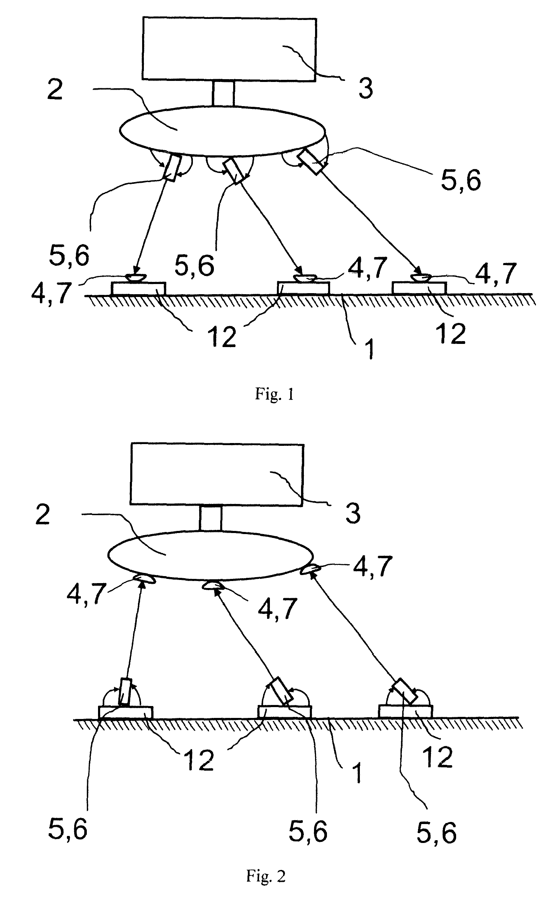

In Fig. 1 there is a basic embodiment of the apparatus for optical measurement and/or optical calibration of a position of an object in space depicted. It concerns a planar projection of a spatial apparatus for optical measurement and/or optical calibration of a position of a measured and/or a calibrated object 3 in space with 3 sensors 5 of an optical or a laser beam, in this case represented by 3 laser sensors 6 positioned on the platform 2 and 3 transmitters 4 of an optical or a laser beam, in this case represented by 3 reflectors 7 of a laser beam positioned on the frame 1 through fixing elements 12 of the optical element. The apparatus has 9 sensors, always two angular sensors of rotation of a laser interferometer for each of the receivers 5 and also always one sensor of length of the laser beam between the transmitter 4 and the receiver 5 of the laser beam for 6 degrees of freedom. This apparatus enables to realize optically the procedure of measurement with redundant measurement described in the EP 1968773B1 document.

In Fig. 2 there is an alternative embodiment of the apparatus for optical measurement and/or optical calibration of a position of an object in space according to Fig. 1 depicted. It concerns a planar projection of a spatial apparatus for optical measurement and/or optical calibration of a position of a measured and/or a calibrated object 3 in space with 3 sensors 5 of an optical or a laser beam, in this case represented by 3 laser sensors 6 positioned on the frame 1 through the fixing members 12 and 3 transmitters 4 of an optical or a laser beam, in this case represented by 3 reflectors 7 of a laser beam positioned on the platform 2.

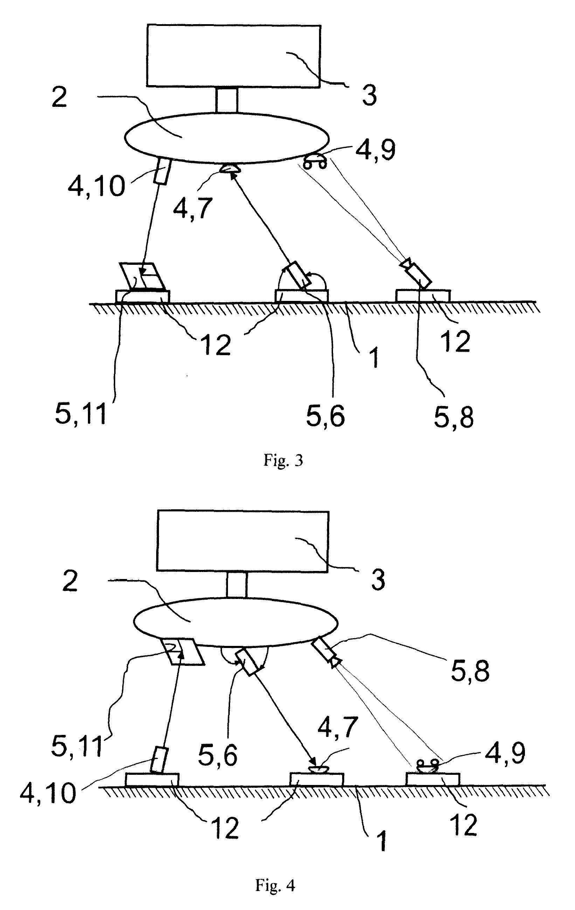

In Fig. 3 there is another alternative embodiment of the apparatus for optical measurement and/or optical calibration of a position of an object in space according to Fig. 1 depicted. It concerns a planar projection of a spatial apparatus for optical measurement and/or optical calibration of a position of a measured and/or a calibrated object 3 in space with 3 transmitters 4 of an optical beam represented by the reflector 7 of a laser beam, the reference element 9 and the source 10 of a laser beam for the photosensitive element 11 positioned on the platform 2 and 3 receivers 5 of an optical beam represented by the laser sensor 6, the optical camera 8 for the reference element 9 and the photosensitive element 11 positioned on the frame 1 through the fixing members 12 of the optical element to the frame 1.

The apparatus has 8 sensors (one receiver 5 has two angular sensors of rotation of a laser interferometer and one sensor of length of a laser beam between the transmitter 4 and the receiver 5 of a laser beam, one optical camera 8 has two angular sensors of rotation of the camera and from the scanned picture of the reference element 9 the distance between the camera 8 and the reference element 9 is determined, one photosensitive element 11 measures two coordinates of impinge of a laser beam from the source 10 of the laser beam for 6 degrees of freedom). This apparatus enables to realize optically the procedure of measurement with redundant measurement described in the EP 1968773B1 document.

Various alternative variants of embodiments of the measurement apparatus are possible, e.g. only 3 optical cameras 8 on the frame 1 opposite the reference elements 9 on the platform 2 or only 3 sources 10 of a laser beam on the platform 2 opposite the photosensitive elements 11 on the frame 1 or another combination of 3 transmitters of the optical beam 4 and 3 receivers 5 of the optical beam are used. The transmitter 4 and the receiver 5 of the optical beam can be positioned on the platform 2 or on the frame 1 in various combinations.

In Fig. 4 there is an alternative embodiment of the apparatus for optical measurement and/or optical calibration of a position of an object in space according to Fig. 3 depicted. It also concerns a planar projection of a spatial apparatus for optical measurement and/or optical calibration of a position of the object 3 in space with 3 transmitters 4 of an optical beam represented by the reflector 7 of a laser beam, the reference element 9 and the source 10 of a laser beam for the photosensitive element 11, but positioned on the frame 1 through the fixing members 12 of the optical element and with 3 receivers 5 of an optical beam represented by the sensor 6 of a laser beam, the optical camera 8 for the reference element 9 and the photosensitive element 11 positioned on the platform 2.

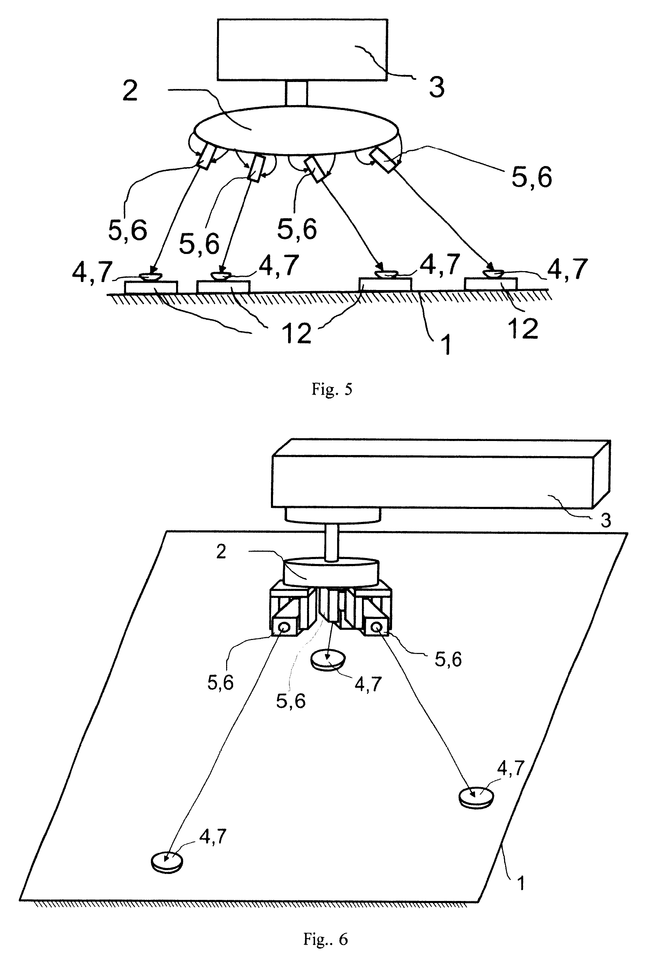

In Fig. 5 there is another alternative embodiment of the apparatus for optical measurement and/or optical calibration of a position of an object in space according to Fig. 1 depicted. It concerns a planar projection of a spatial apparatus for optical measurement and/or optical calibration of a position of the object 3 in space with 4 receivers 5 of an optical beam represented by the laser sensors 6 positioned on the platform 2 and with 4 transmitters 4 of an optical beam represented by the reflectors 7 of a laser beam positioned on the frame 1 through the fixing members 12 of the optical element. The reflectors 7 of the laser beam positioned on the frame 1 through the fixing members 12 of the optical element are removable off the frame 1 and can be attached to the frame 1 again. This can possibly be enabled by the fixing members 12 of the optical element represented by magnetic quick clamps. This apparatus has 12 sensors, four laser sensors with three detectors, similarly to the embodiment depicted in Fig. 1 for 6 degrees of freedom. This apparatus then enables to realize optically the procedure of measurement described in the patent application PV 2010-178 and also further described with a browse through a large working area.

Optical measurements are carried out using pairs of the sensor 4 and the receiver 5 of an optical beam, which measure a relative Cartesian position in three coordinates of the transmitter and the receiver of an optical beam. As a transmitter of an optical beam the reflector 7 of the laser beam, the reference element 9 and the source 10 of the laser beam can be used. As a receiver of an optical beam the laser sensor 6, the optical camera 8 and the photosensitive element 11 can be used.

The optical sensor 6 is a laser interferometer with a subsidiary reflector 7 of a laser beam, where the laser interferometer is attached on a spherical joint (with two degrees of freedom) with feedback controlled drives. Each of the optical sensors 6 positioned on the platform 2 and/or on the frame 1 transmits a laser beam, which is reflected by the reflector 7 of a laser beam positioned on the frame 1 and/or the platform 2 and impinges back to the optical sensor 6, where it is processed by a laser interferometer and using a known, but sophisticated feedback control for the movement of the optical sensor 6 in the spherical joint the laser interferometer is rotated so that the laser sensor 6 can still control the laser beam, transmitted by the reflector of a laser beam 7, using the laser interferometer. From the knowledge of two angles of rotation of the laser beam measured in the spherical joint and from the knowledge of a length of the laser beam between the laser interferometer and the reflector of a laser beam measured using the laser interferometer, which represents spherical coordinates, the relative Cartesian position given by the Cartesian coordinates x, y, z of the laser sensor 6 and the reflector 7 of a laser beam is determined using a conversion of spherical coordinates to the Cartesian coordinates.

The optical camera 8 with the reference element 9 is the optical camera 8, which scans an image of the reference element 9 and from these images the relative position of the reference element 9 and the optical camera 8 is determined using photogrammetry methods. At the same time, this relative position of the reference element 9 and the optical camera 8 is used for the feedback control of the movement of the optical cameras 8 in the spherical joints so that the optical cameras 8 can still scan the reference element 9. The reference element 9 is represented by at least three different points, which can be taken as an image and displayed using the optical camera 8. An example of the reference element 9 can be a plate with 4 luminous led diodes positioned in a tetragon shape of known dimensions. The knowledge of the tetragon makes the procedure of the measurement faster since it is not needed to carry out its calibration at first. Another example of the reference element 9 can be a plate with a known geometric pattern with at least tree distinguishable peaks.

The source 10 of a laser beam for the photosensitive element 11 is a small laser represented e.g. by a laser pointer. Laser beams transmitted by the source 10 of a laser beam impinge on the photosensitive element 11. The photosensitive element 11 determines the Cartesian coordinates of impinge of the laser beam in the plane of impinge of the laser beams on the photosensitive element 11 and from the coordinates of the impingement of the laser beam a condition for determination of the relative Cartesian position of the source 10 of a laser beam and the photosensitive element 11 is determined. The number of the laser beams impinging on the photosensitive elements 11 for a full determination of the relative Cartesian position of the sources 10 of laser beams and the photosensitive elements 11 is at least three, but for higher accuracy and auto-calibration four and more is better. If the number of the laser beams impinging on the photosensitive elements 11 is smaller than three, another pair of the transmitter 4 and the receiver 5 of an optical beam must be used for optical measurement and/or optical calibration of a position of an object in space. The source 10 of a laser beam can be attached in the spherical joint and its rotation can be feedback controlled so that the laser beam impinges on the photosensitive element 11.

Fig. 6 depicts a spatial view on the apparatus according to Fig. 1.

Using the above described apparatus for measurement or calibration of an object in space, thereinafter called as the investigated (manipulated) object, it is possible to use even this apparatus, which is not calibrated itself. The very calibration of the apparatus is carried out either before its use for measurement and/or calibration of the investigated object or its auto-calibration is carried out together with measuring and/or calibrating the investigated object.

The procedure of measurement and/or calibration of an object in space including the above mentioned auto-calibration of the apparatus can be carried out in the following steps:
1-The platform of the apparatus is fixed with the investigated object, which can be e.g. a spindle or a grab of the production machine.
2 - After that the production machine performs a diverse movement with the spindle or the grab through most of the working area using its drives. By the diverse movement such a movement is meant, during which the platform with the fixed object moves in a substantial part of the working area, which enables obtaining a relevant system of equations for determination of a position and/or calibration of the investigated object and, at the same time, measurements of all the sensors of the apparatus are activated. During this movement the measured parameters in a number of at least one larger than is the number of degrees of freedom are scanned.
3 - On the basis of all the measured parameters, from the system of equations describing binding conditions of the measuring apparatus determined above, a position of the measurement apparatus towards the production machine is determined and, at the same time, the relative position of the transmitter 4 and the receiver 5 of optical beams of the measurement apparatus on the frame 1 and/or on the platform 2 of the measurement apparatus, auto-calibration of the measured apparatus, i.e. determination of its position towards the measured object in space and determination of dimensions of the measurement apparatus, is achieved. The binding conditions for the system of equations are formulated as a relative position of the receivers 5 of an optical or a laser beam and relevant transmitters 4 of an optical or a laser beam, which is determined using the above mentioned measurements in the receivers 5*.*
4 - After the auto-calibration of the apparatus the investigated object, e.g. the production machine connected to the platform of the apparatus, performs a diverse movement with the spindle or with the grab through most of the working area using its drives again.

During this movement the measured parameters in the number of at least one larger than the number of degrees of freedom are scanned again.
5 - On the basis of the measured redundant parameters mentioned above a position of the investigated object is determined or its calibration is carried out using the system of equations describing the binding conditions of the measured apparatus.

In the case that the apparatus for measurement and/or calibration of a position of an object in space itself is calibrated before its usage for measurement or calibration of the investigated object, the measurement and/or calibration of the investigated object is carried out separately from the above mentioned point 4, thus the investigated object, e.g. the production machine, e.g. its spindle or grab, connected to the platform of the apparatus, executes a diverse movement with the platform of the apparatus through most of its working area using its drives again. During this movement the measured parameters in the number of at least one larger than the number of degrees of freedom are scanned again. On the basis of the measured redundant parameters mentioned above a position of the investigated object is determined or its calibration is carried out using the system of equations describing the binding conditions of the measuring apparatus.

The procedure of measurement and/or calibration of an object in space, including the above mentioned auto-calibration, can be possibly carried out e.g. using the further mentioned method in the following steps:
1- The transmitters 4 of optical beams and/or the receivers 5 of optical beams are attached to the frame 1, which can possibly be a working desk of a production machine and the platform 2 is fixed to the investigated object 3, which can possibly be the spindle or the grab of the production machine.
2 - After that the production machine performs a diverse movement with the investigated object 3, e.g. with the spindle or the grab, through most of the working area using its drives. By the diverse movement such a movement is meant, during which the platform with the fixed object 3 moves within a substantial part of the working area, which enables obtaining a relevant system of equations for determination of a position and/or calibration of the investigated object 3 and, at the same time, measurements of all the sensors of the receivers 5 of optical beams the apparatus are activated. During this movement the measured parameters are scanned in a number of at least one larger than is the number of degrees of freedom of the free platform 2 before its attaching to the measured or the calibrated object 3.
3 - On the basis of all the measured parameters, from the system of equations describing binding conditions of the measurement apparatus determined before, a position of the measurement apparatus towards the production machine is determined and, at the same time, the relative position of the transmitters 4 and the receivers 5 of optical beams of the measurement apparatus on the frame 1 and/or on the platform 2, auto-calibration of the measurement apparatus, i.e. determination of its position and construction parameters, as the relative distance of the transmitters 4 and/or the receivers 5 of optical beams, length of arms, distances of axes of rotational joint, angles of rotational joints etc., is achieved. The binding conditions are formulated similarly to the description mentioned above.
4 - After this auto-calibration of the apparatus the investigated object 3, e.g. the production machine connected to the platform 2 of the apparatus, performs a diverse movement with the spindle or with the grab through most of the working area using its drives. During this movement the measured parameters are scanned in the number of at least one larger than is the number of degrees of freedom of the free platform 2 before its attaching to the measured or the calibrated object 3.
5 - On the basis of the measured redundant parameters mentioned above a position of the investigated object 3 is determined or its calibration is carried out using the system of equations describing the binding conditions of the measured apparatus.
6 - If it is necessary to carry out a measurement in another part of the working area of the production machine, which is out of the reach of the working area of the measurement apparatus regarding the actual position of the transmitters 4 and/or the receivers 5 of optical beams attached to the frame 1, a gradual transfer of all the transmitters 4 and/or the receivers 5 of optical beams positioned on the frame 1 to new positions in which the measurement can be performed is carried out.

This is performed in such a way that one of the transmitters 4 and/or the receivers 5 is disconnected from the frame 1 and is moved to a new position and attached to the frame 1. During this transfer the number of the measured parameters during the movement of the platform 2 with the measured or the calibrated object 3 after detachment of one arbitrary transmitter 4 and/or receiver 5 of optical beams from the frame 1 is at least equal to the number of degrees of freedom of the free platform 2 before its attachment to the measured or the calibrated object 3. After attaching the transferred transmitter 4 and/or the receiver 5 of optical beams to the frame 1, auto calibration is performed using the above mentioned procedure according to the point 2 and 3. Then, if necessary, transfer of another transmitter 4 and/or receiver 5 of optical beams and its auto calibration can follow. The transmitters 4 and/or receivers 5 of optical beams can be transferred the same way repeatedly.
7 - After gradual transfer of the necessary number (e.g. all) of the transmitters 4 and/or the receivers 5 of optical beams to such a position, in which it is not possible to carry out a measurement in another part of the working area of the production machine, which is already included in the range of the working area of the measuring apparatus in a new position given by the attached transferred transmitters 4 and/or receivers 5 of optical beams to the frame 1, a required measurement of a position of the production machine using a procedure according to the points 4 and 5 is carried out.

In the case that the apparatus for measurement and/or calibration of a position of an object in space itself is calibrated before its usage for the measurement or calibration of the measured object 3, the measurement and/or calibration of the investigated object 3 is carried out separately from the above mentioned point 4, thus the measured object 3, e.g. the production machine or its spindle or grab, connected to the platform 2 of the apparatus, executes a diverse movement with the platform 2 of the apparatus through most of its working area using its drives again. During this movement the measured parameters are scanned in the number of at least one larger than is the number of degrees of freedom of the free platform 2 before its attachment to the measured or the calibrated object 3. On the basis of the measured redundant parameters mentioned above a position of the investigated object 3 is determined or its calibration is carried out using the system of equations describing the binding conditions of the measured apparatus determined before.

Redundant measurements with redundancy at least 2 and higher are advantageous, e.g. the number of sensors is of at least three larger than the number of degrees of freedom of the object 3. Measurement and its evaluation is carried out by a computer.

## Claims

1. The apparatus for optical measurement and/or optical calibration of a position of an object in space consisting of a platform to be connected to a measured or a calibrated object and of at least one transmitter of an optical beam positioned on the platform and/or on a frame and of at least one receiver of an optical beam positioned on the frame and/or on the platform featured by the fact that the number of transmitters (4) of optical beams is at least three and the number of receivers (5) of optical beams is at least three.

2. The apparatus for optical measurement and/or optical calibration of a position of an object in space according to the Claim 1, featured by the fact that at least three transmitters (4) of optical beams are represented by the reflectors (7) or by the reference elements (9) or by the sources (10) of a laser beam or by a combination of the reflectors (7) and/or the reference elements (9) and/or the sources (10) of a laser beam positioned on the frame (1) and/or on the platform (2) and at least three receivers (5) of optical beams are represented by the laser sensors (6) or by the optical cameras (8) or by the photosensitive elements (11) and by a combination of the laser sensors (6) and/or the optical cameras (8) and/or the photosensitive elements (11) positioned on the platform (2) and/or on the frame (1).

3. The apparatus for optical measurement and/or optical calibration of a position of an object in space according to the Claim 2, featured by the fact that at least three transmitters (4) of optical beams are represented by at least three reflectors (7) of a laser beam positioned on the frame (1) and/or on the platform (2) and the receivers (5) of optical beams are represented by at least three laser sensors (6) positioned on the platform (2) and/or on the frame (1).

4. The apparatus for optical measurement and/or optical calibration of a position of an object in space according to the Claim 2, featured by the fact that the transmitters (4) of optical beams are represented by at least three reference elements (9) positioned on the frame (1) and/or on the platform (2) and the receivers (5) of optical beams are represented by at least three optical cameras (8) positioned on the platform (2) and/or on the frame (1).

5. The apparatus for optical measurement and/or optical calibration of a position of an object in space according to the Claim 2, featured by the fact that the transmitters (4) of optical beams are represented by at least three sources (10) of a laser beam positioned on the platform (2) and/or on the frame (1) and the receivers (5) of optical beams are represented by at least three photosensitive elements (11) positioned on the frame (1) and/or on the platform (2).

6. The apparatus for optical measurement and/or optical calibration of a position of an object in space according to one of the above mentioned Claims, featured by the fact that the transmitters (4) of optical beams and/or the receivers (5) of optical beams are connected to the frame (1) removably, whereas the number of transmitters (4) of optical beams is at least four and the number of receivers (5) of optical beams is at least four.
